# EUROPEAN PATENT SPECIFICATION

(11) **EP 1 426 601 B1**
(45) Date of publication and mention of the grant of the patent: **17.02.2010**
(21) Application number: 03257624.1
(22) Date of filing: 03.12.2003
(51) Int. Cl.: F02G 5/00, F24D 11/00

(54) **Method and apparatus for conserving heat**
Verfahren und Vorrichtung zur Wärmekonservierung
Procédé et dispositif pour la conservation de la chaleur

(30) Priority: 03.12.2002 GB 0228105
(43) Date of publication of application: 09.06.2004
(73) Proprietor: Thomason, John Andrew, Flore, Northants NN7 4LZ (GB)
(72) Inventor: Thomason, John Andrew, Flore, Northants NN7 4LZ (GB)
(74) Representative: Wilson Gunn

(56) References cited:
- WO-A-96/05476
- DE-A- 2 635 632
- DE-A- 2 821 690
- DE-A- 3 004 498
- DE-A- 19 516 406
- DE-A- 19 719 824
- DE-A- 19 740 398
- FR-A- 2 507 752
- GB-A- 2 025 604
- US-A- 4 161 211
- US-A- 4 219 075
- US-A- 4 289 095
- US-A1- 2002 108 745

## Description

The present application relates to a method and apparatus for conserving heat.

Road vehicles driven by fuel-burning or electricity-consuming g motors such as motor cars or automobiles generate a substantial amount of heat which is wasted.

For example in a vehicle powered by an internal combustion engine heat generated by the engine is commonly dissipated in three different ways:-
(a) heat removed from the engine by causing liquid coolant to flow through the engine is conveyed by the coolant to a radiator where it is discharged to atmosphere and to the vehicle interior heating system when in operation. Heat may also transferred to the engine oil and extracted from the oil circulation system by a suitable heat exchanger.
(b) heat generated by the combustion process is discharged via an exhaust system to atmosphere,
(c) heat from the surface of the engine and other heated parts including the exhaust system is dissipated into the surrounding air mainly by convection.

Internal combustion engines are highly inefficient, as much as 65% of the energy produced by such an engine being dissipated as heat.

There is also a substantial wastage of heat in vehicles which have motors powered by electricity generated by hydrogen/oxygen regenerative fuel cells.

DE 197 19 824 A, DE 197 16 406 A, DE 30 04 498 A, DE 28 21 690, DE 26 35 632 A and FR 2 507 752 A all disclose arrangements for conserving heat generated in a vehicle, according to claim 1, first part.

The present invention has for its object the provision of an alternative method and apparatus for conserving heat produced by road vehicles powered by fuel-burning or electricity-consuming motors.

According to a first aspect of the invention there is provided a method of conserving heat comprising the steps of storing heat generated in road vehicle during its use in a heat store on or in the vehicle, connecting the heat store to means provided at a remote location and adapted to store heat for subsequent use or to use heat, and disconnecting the heat store from said remote means, the heat stored in the road vehicle is obtained from the exhaust system of the vehicle and in that the vehicle heat store is connected to said remote means by way of a thermally conducting block or insert which is removably placed against or removably inserted into the vehicle heat store so that heat is transferred to it from the heat store by conduction, the block or insert being thermally connected to the remote means by heat transfer means for transferring heat from the block or insert to said remote means, the block or insert being removed from the vehicle heat store to disconnect the vehicle heat store from the remote means.

The remote location may be in domestic, industrial or commercial premises, a caravan, mobile home or boat.

Although heat transferred to the remote location may be used as the transfer takes place, for example the heat transferred from, for example, a motor car parked overnight in the garage of a house may be used directly to keep the interior of the house warm, it is primarily intended that the said means at the remote location shall be means for storing the transferred heat for future use. These means may comprise a tank or other vessel for holding water or other liquid capable of retaining heat. Particularly in domestic premises the said means may be the water tank conventionally incorporated in the hot water supply or/and central heating system so that the heat transferred to water in the tank by the method of the invention can be used to provide a hot water supply or/and space heating in the premises.

The heat stored in the road vehicle may also be obtained from the cooling system of the vehicle. The heat stored in the road vehicle may additionally be obtained from the oil circulation system of the vehicle via a suitable heat exchanger.

In the vehicle the heat may be stored in the cooling system of the vehicle itself if it is the heat extracted from the engine by liquid coolant which is to be used, or in a specially provided heat storage means arranged to receive and store heat from any one or more of the sources referred to in (a) to (c) above. In the latter case the heat store may comprise a vessel containing an appropriate fluid which may be a suitable gas but is preferably a suitable liquid. The heat-retaining capacity of the heat store may be enhanced by providing in the liquid a material, for example in the form of spheres, which has latent heat capacity, for example a phase change material.

The means for removing heat from the block or insert and for transferring the heat to the said means at the remote location may be a circuit through which water or other liquid is circulated.

In a further embodiment heat may be transferred from the heat store to the vehicle interior heating system. This can allow the interior of the vehicle to be heated when the vehicle engine is not switched on. Such a system would be of particular use in cold weather conditions. It is also possible that heat can be extracted and transferred to the vehicle interior heating system directly from the cooling system of the vehicle or from the exhaust system of the vehicle or from the oil circulation system of the vehicle or from any combination of these three systems as desired.

In another embodiment, heat may be transferred from the heat store to the engine coolant system when desired, in particular whenever the temperature of the vehicle drops below a predetermined level. This is of particular relevance to vehicles powered by hydrogen fuel cells, wherein heat may be transferred from the heat store in cold weather conditions to the fuel cells to prevent water droplets freezing therein and damaging the fuel cell. This can be arranged to take place automatically by means of a thermostat or other temperature sensor when the vehicle is, for example, parked overnight.

According to a second aspect of the invention there is provided apparatus for conserving heat comprising a storage means incorporated in or adapted to be fitted to a road vehicle and adapted to store heat generated during use of the vehicle, and transfer means which are connected or adapted to be connected to the storage means and to means provided at a remote location and adapted to store or use heat and which are adapted to transfer heat from the storage means to said means at the remote location, the connection of the transfer means to the storage means or/and the said means at the remote location being releasable, the apparatus stores heat obtained from the exhaust system of the vehicle and in that the transfer means comprises a thermally conducting block or insert which can be placed against or removably inserted into the vehicle heat store that heat is transferred to it by conduction, the block or insert having means for removing heat from it and for transferring the heat to said means adapted to store or use heat at the remote location.

Preferably the apparatus further includes a storage means installed or adapted to be installed at said remote location and adapted to be connected to the transfer means so as to receive and store heat transferred from the first storage means, the second storage means being connected or connectible to means for utilising the heat stored in it.

The heat source to which the storage means in a vehicle is connected or connectible may generate heat at a faster rate or produce a greater amount of heat than can be extracted or stored by said storage means, and to cater for this the apparatus may include means for controlling the transfer rate or/and amount of heat extracted by said storage means from the vehicle heat source.

The invention will now be described, by way of example, with reference to the accompanying drawings, in which:-
FIGURE 1 is a diagrammatic illustration of a conventional cooling system of a motor car,
FIGURE 2 is a diagrammatic illustration of part of one form of heat conservation apparatus which is fitted in a motor car,
FIGURE 3 is a diagrammatic illustration of part of the apparatus illustrated in FIGURE 2 which is installed in a house,
FIGURE 4 shows a modification of the part of the apparatus illustrated in FIGURE 3,
FIGURES 5 to 8 are diagrammatic illustrations of four further forms of apparatus for conserving heat, and
FIGURE 9 is a diagrammatic illustration of a yet further form of apparatus for conserving heat fitted to a motor vehicle, in accordance with the invention.

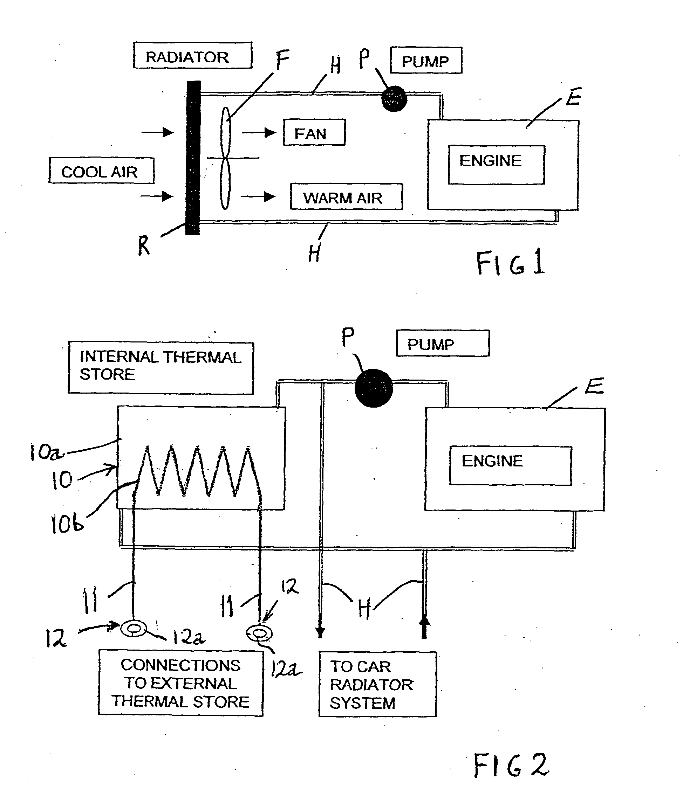

Referring to FIGURE 1 of the drawings, a conventional coo ling system of a motor car comprises a radiator R connected by hoses or pipes H to internal passages formed in the engine E to form a closed circuit for liquid coolant which is pumped from the radiator through the engine and back to the radiator by a pump P to convey heat from the engine to the radiator. Cool air flows through the radiator under a ram effect when the vehicle is in motion and/or under the effect of a fan F, heat being extracted from the coolant by the radiator and transferred to the air so that warm air emerges from the radiator.

Figures 2 to 8 illustrate various forms of apparatus for conserving heat which are not in accordance with the invention but which are described for information.

FIGURE 2, shows one form of apparatus for conserving heat in which a thermal store 10 is connected into the cooling system in a car or other road vehicle. This store comprises a heat exchanger comprising a tank 10a connected in parallel with the radiator R so that coolant pumped through the circuit by the pump P flows through the tank. When the pump is then stopped a body of hot coolant is left in the tank 10a. The thermal store has a coil 10b which is disposed inside the tank 10a and has its ends connected to pipes 11 so that liquid can flow through the coil and thereby remove heat from the coolant in the tank 10a. The heat store may be located in the boot or trunk of the car.

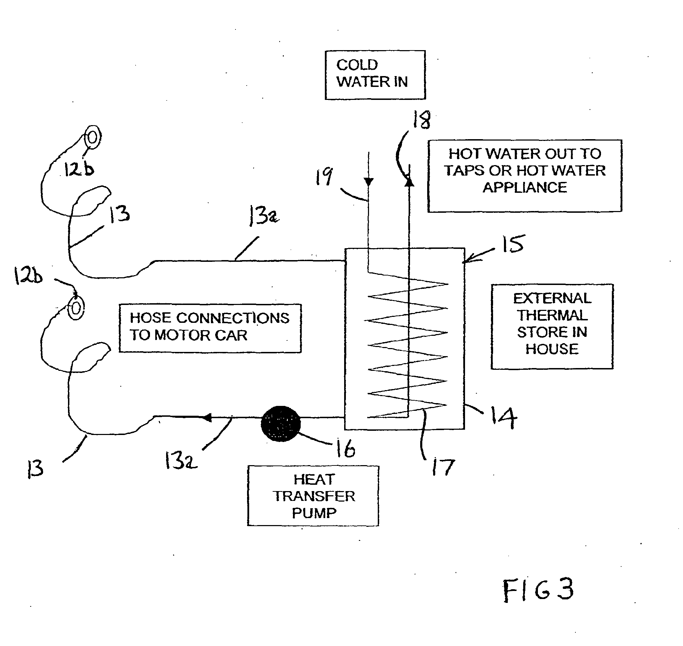

As shown in FIGURE 3 the pipes 11 are releasably connective by two connectors 12 and flexible hoses 13 to a part of the apparatus installed in a house or other domestic dwelling. These connectors each comprises two releasably interengageable elements one of which designated 12a is mounted on the car in a readily accessible position and the other of which designated 12b is attached to one of the hoses 13. The two hoses 13 are normally kept in a stowed position outside the house or inside a garage for the car. When the car is parked outside the house or inside the garage the hoses can be extended and their connector elements 12b coupled to the connector elements 12a mounted on the car. The two hoses 13 are connected by pipes 13a to a tank 14 of a thermal store 15 intended to hold a body of water (or other suitable thermal transfer liquid), one of the pipes 13a being fitted with a pump 16 operable to cause water from the tank 14 to circulate through the circuit comprising the coil 10b in the thermal store 10, the pipes 11, the hoses 13, the pipes 13a and the tank 14 whereby a body of hot water is created in the tank 14 by the heat removed from the thermal store 10 and transferred to the tank by the circulating water.

Disposed in the tank 14 is a coil 17 connected at one end by a pipe 18 either to a hot water system in the house, for example one or more hot water taps, or to the inlet of a central heating system in the house, the other end of the coil being connected by a pipe 19 in the first case to a cold water supply, or in the second case to the outlet of the central heating system in a closed circuit. Therefore, as water flows through the coil 17 it is heated by the body of hot water stored in the tank 14 to provide a hot water supply for the house.

The apparatus is used in the following way. The car is used normally (with the hoses 13 disconnected) and during such use heat from the cooling system of the engine is transferred to and stored in the thermal store 10. When the car returns to the house the hoses 13 are connected to the vehicle heat store 10 by the connectors 12 and the pump 16 set into operation. As a result water from the tank 14 is circulated through the thermal store 10 and is heated. When the pump is stopped the water in the tank 14 is therefore hot and ready to heat water flowing through the coil 17. The pump may be arranged to be stopped automatically when a point is reached at which there is thermal equilibrium between the stores and no more heat is being transferred to the tank 14, which may be detected by temperature sensors in the pipes 13a. The connectors 12 are then disconnected and the car can be used again.

In the case where the thermal transfer fluid is the same as the coolant system fluid, the coil 10b may be omitted. The pipes 11 are then connected directly to the body of coolant fluid contained within the tank 10a.

The thermal store 10 in the car contains a material which has latent heat capacity and a higher specific heat capacity than water in order to gain the maximum heat storage within the minimum space. A suitable material for this purpose would be a phase change material such as calcium chloride hexahydrate which has a very high specific heat and latent heat through the working temperature range. The material may be in the form of spheres disposed in the body of water in the tank 10a so that hot water from the cooling system flowing through the tank 10a heats the water and the spheres in the tank, and subsequently the heat retained in the water and spheres is transferred to water flowing through the coil 10b.

If desired the heating of the water in the water house store can be supplemented, for example by an electric immersion heater or using the heat exchanger 15 to provide a pre-heat supply to a full hot water supply system

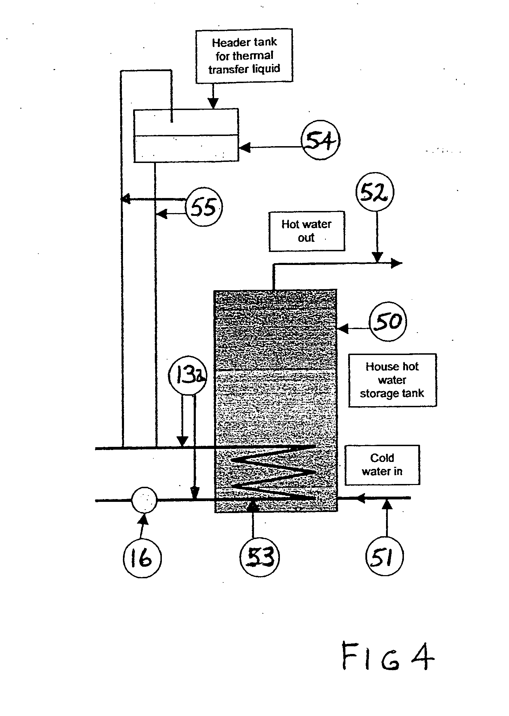

FIGURE 4 shows a modified version of the apparatus illustrated in FIGURES 2 and 3, in which the thermal store in the house is replaced by a conventional hot water storage tank 50 having an inlet pipe 51 for cold water and an outlet pipe 52 for hot water from the tank. The pipes 13a in this case (one of which incorporates the pump 16) are connected to the respective ends of a coil 53 disposed in the tank 50 so that when hot water or other liquid from the vehicle heat store is circulated through the coil 53 it heats the water in the tank 50.

FIGURE 4 also shows a header tank 54 connected by pipes 55 to one of the pipes 13a so as to provide a reservoir of thermal transfer liquid for the circuit comprising the coil 10b, the pipes 11, the hoses 13 and the coil 53.

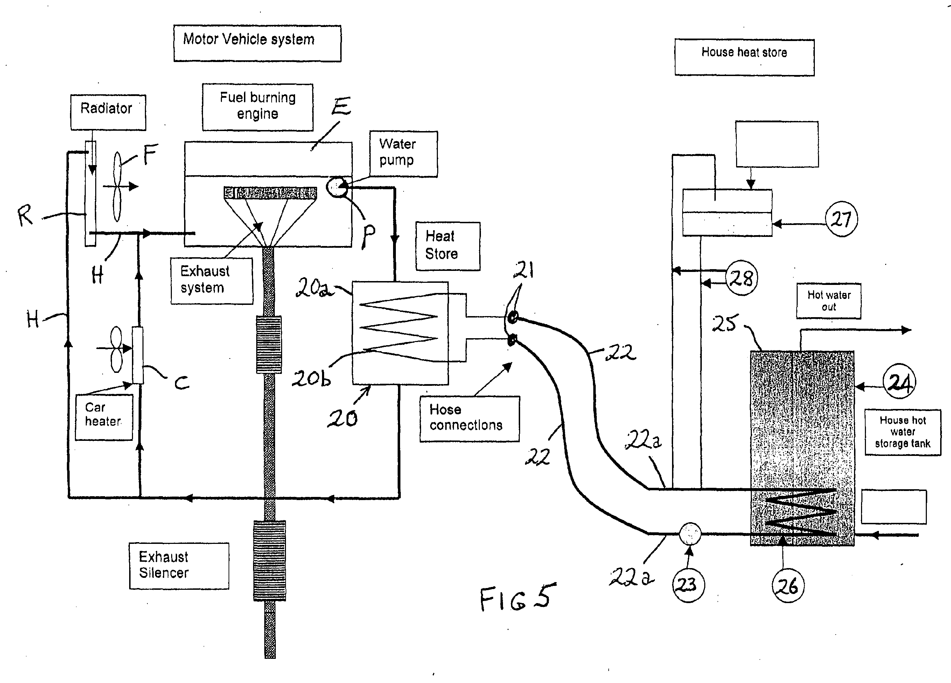

In the arrangements shown in FIGURES 5 to 8 the same reference numerals are used to indicate like parts. In FIGURE 5 a thermal store 20 similar to the store 10 is mounted in a car and includes a tank 20a which is connected in series with the car radiator R in the cooling circuit of the engine E and in parallel with a car heater C so that water flowing through the circuit when the car engine is running conveys heat from the engine to the thermal store 20 and to the heater C and the radiator R. The body of water thereby created in the thermal store 20 can then be used to heat water caused to flow through a coil 20b disposed in the store 20.

This coil 20b is connectible by releasable connectors 21 similar to the connectors 12, hoses 22 and pipes 22a, one of which incorporates a circulation pump 23, to a thermal store 24 in a house. This thermal store is the same as the store 50, 53 shown in FIGURE 4, its tank and coil being designated 25 and 26 respectively. As in the embodiment of FIGURE 4, operation of the pump 23 with the thermal store 20 of the car connected to the thermal store 24 i the house by the releasable connectors causes heat to be transferred to the water in the tank 25 which then acts as a thermal store providing a hot water supply, for example for a tap or central heating system. Shown in FIGURE 5 is a header tank 27 connected by pipes 28 to the coil 26 and containing a reservoir of thermal transfer liquid such as water for the circulatory system 20b, 22, 26.

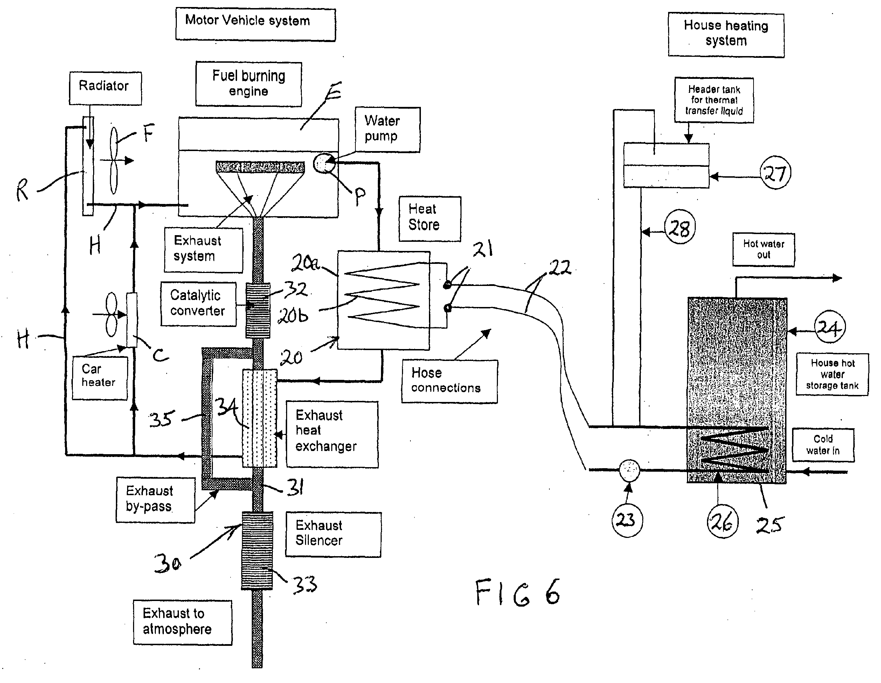

The arrangement shown in FIGURE 6 is similar to that shown in FIGURE 5 except that water circulating in the car cooling system and passing through the thermal store 20 is heated not only by the engine E but also by gases passing through the car exhaust system 30 which includes pipework 31, a catalytic converter 32 and a silencer 33. A heat exchanger 34 is connected into the pipework and the water flowing through the thermal store 20 passes through this heat exchanger en route to the radiator R and the heater C and is thereby heated. To ensure that the water is not overheated the pipework 31 includes a by-pass 35 to divert some of the heat of the exhaust gases away from the heat exchanger 34.

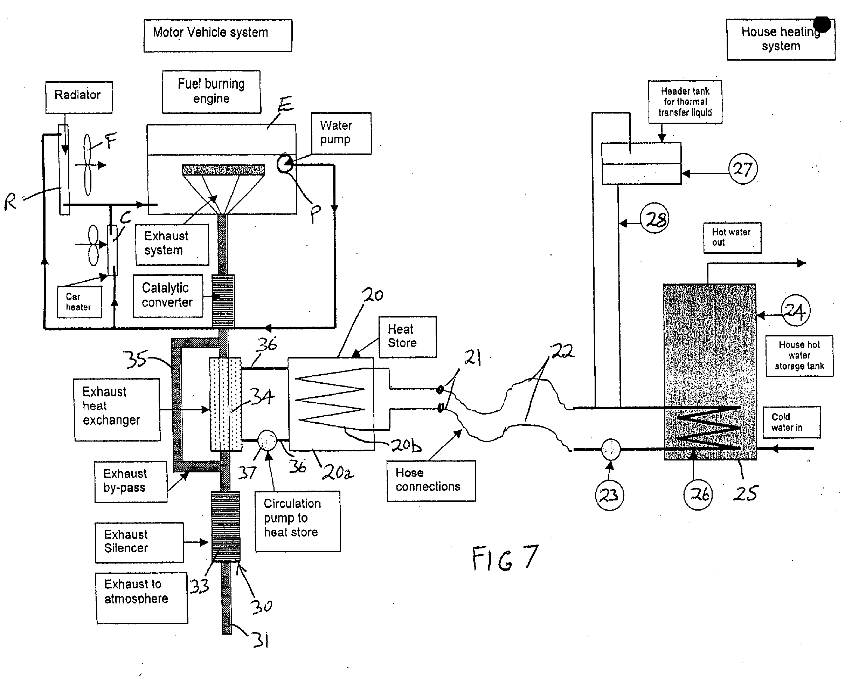

FIGURE 7 shows a modification of the arrangement of FIGURE 5 in which the thermal store 20 is separate from the car cooling system and is supplied with heat solely by the exhaust system. In this case the heat exchanger 34 incorporated in the exhaust pipework is in a closed circuit with the thermal store 20, being connected to its tank 20a by pipes 36 one of which incorporates a pump 37 for circulating water or other suitable liquid through the circuit to convey heat from the exhaust gases to the thermal store.

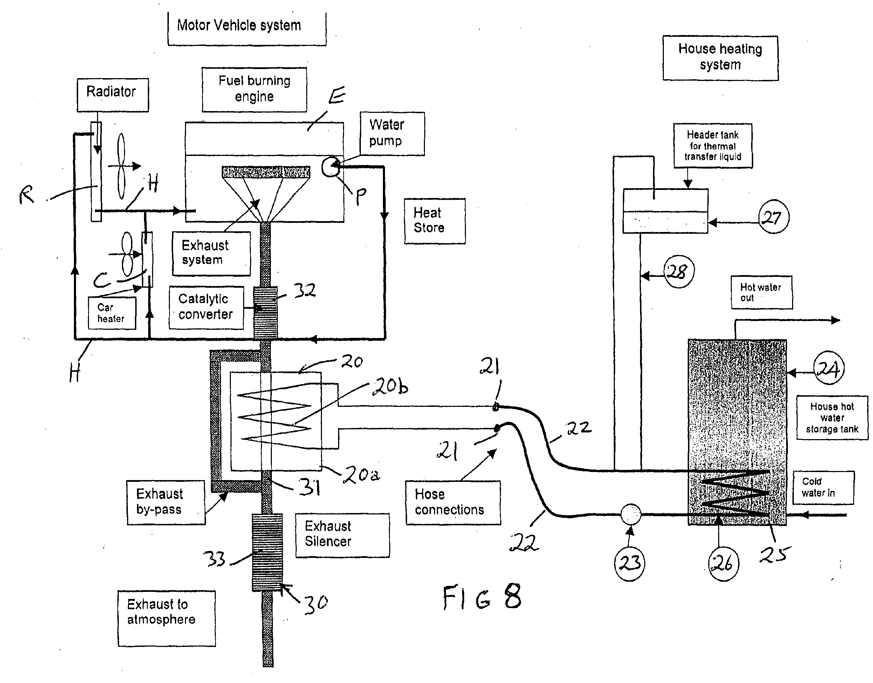

FIGURE 8 shows a modification of the arrangement illustrated in FIGURE 7 in which the thermal store 20 is arranged to receive heat direct from the exhaust system. In this case one of the pipes 31 of the exhaust system is arranged to direct the exhaust gases over a thermal store material, for example an aluminium block or bricks similar to those used in domestic storage heaters, or through a conduit, the material being disposed in, or the conduit extending through the tank 20a of the thermal store so that fluid in the tank is heated by the exhaust gases. In this embodiment the by-pass 35 can be omitted if desired.

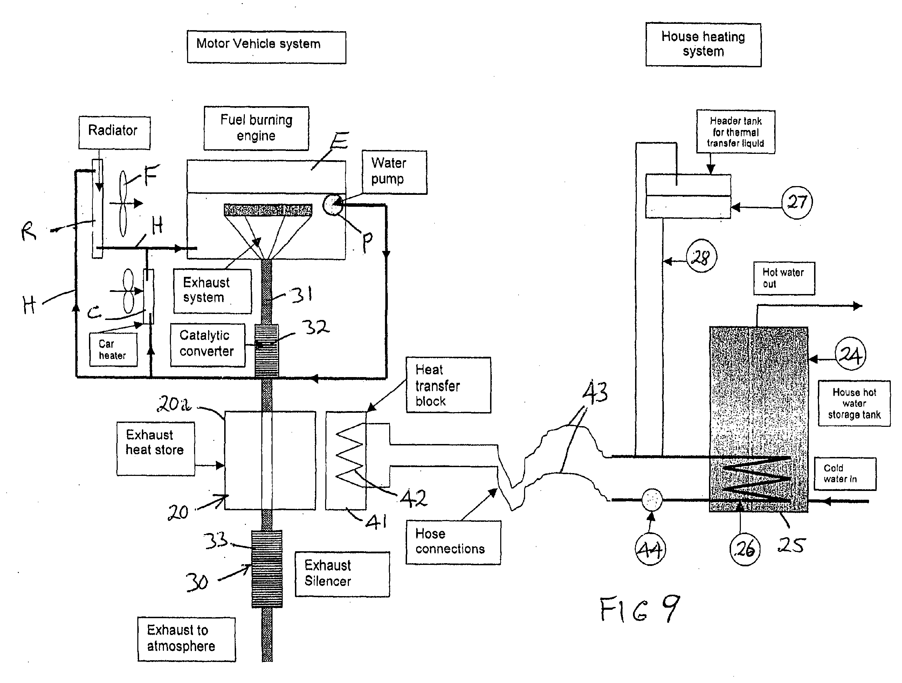

FIGURE 9 shows an embodiment in accordance with the invention which incorporates a modification of the embodiment shown in FIGURE 8 in that the exhaust by-pass is omitted (although this is not necessary), there is no coil 20b in the thermal store 20 and the thermal store 20 is not connectible by connectors to the thermal store in the house (indeed with the by-pass omitted the thermal store of the exhaust system will attain temperatures up to 500 DEG C, which may be too hot to permit heat to be transferred to the thermal store in the house by passing liquid through a coil in it). The part of the apparatus in the house is provided with a metal heat transfer block 41 which contains a coil 42 permanently connected by hoses 43, one of which incorporates a pump 44, to the tank 25 of the thermal store 24 in the house. This block is left at the house when the car is in use. When the car returns the block is clamped against the tank of the thermal store 20 in the car so that heat from the store is transferred to it by conduction, such heat being conveyed to the thermal store in the house by operation of the pump heat transfer fluid such as 44 which causes water to circulate through the coils 42, 26 and the hoses and pipes 43. In an alternative arrangement which is also in accordance with the invention, the block can be replaced by a suitable, thermally conductive insert, typically a rod. The insert is adapted to be inserted in to the vehicle heat store such that heat from the store is transferred to it by conduction. The heat from the insert may be transferred to an external thermal store by a similar means to that used in respect of the block as described above.

An advantage of this embodiment is that it does not involve wet connections, which carry the danger of leakage.

In all the embodiments the thermal store in the house may be an alternative form comprising a tank connected in the heat transfer circuit of the thermal store in the car in place of the coil 26, this tank containing a body of water to which heat is transferred from the vehicle thermal store, a coil being disposed in this body of water and connected into the house hot water or central heating system so that water flowing through this coil is heated for use in the system.

In each of the above embodiments the coolant flow is controlled by a suitable control means to restrict or increase the flow of water through the engine E and or car heater C as desired. The control means may additionally be used to cause the flow to bypass the radiator R, car heater C or heat store as desired 20. This allows heat from the heat store 20 to be directed to the engine E if necessary or for the radiator R to be bypassed when the car is started in order to allow the engine heat to be directed to the car heater C.

It is of course to be understood that the present invention is not to be restricted to the details of the above embodiments which are described by way of example only.

## Claims

1. A method of conserving heat comprising the steps of storing heat generated in a road vehicle during its use in a heat store on or in the vehicle, connecting the heat store (20) to means (24) provided at a remote location and adapted to store heat for subsequent use or to use heat, and disconnecting the heat store from said remote means (24), the heat stored in the road vehicle is obtained from the exhaust system (30) of the vehicle and **characterised in that** the vehicle heat store is connected to said remote means (24) by way of a thermally conducting block (41) or insert which is removably placed against or removably inserted into the vehicle heat store so that heat is transferred to it from the heat store by conduction, the block (41) or insert being thermally connected to the remote means (24) by heat transfer means (26, 42, 43, 44) for transferring heat from the block or insert to said remote means (24), the block or insert being removed from the vehicle heat store to disconnect the vehicle heat store from the remote means.

2. A method of conserving heat as claimed in claim 1 wherein the remote location is in domestic, industrial or commercial premises.

3. A method of conserving heat as claimed in claim 1 or claim 2 wherein the remote location is in a caravan, mobile home or boat.

4. A method of conserving heat as claimed in anyone of claims 1 to 3 wherein the heat transferred to the remote location is used as the transfer takes place.

5. A method of conserving heat as claimed in anyone of claims 1 to 4 wherein the said means at the remote location shall be means (24) for storing the transferred heat for future use.

6. A method of conserving heat as claimed in anyone of claims 1 to 5 wherein the means (24) comprises a tank or other vessel (25) for holding water or other liquid capable of retaining heat.

7. A method of conserving heat as claimed in claim 6 wherein the said means(24) may be the water tank (25) conventionally incorporated in the hot water supply or/and central heating system so that the heat transferred to water in the tank by the method of the invention can be used to provide a hot water supply or/and space heating in the premises.

8. A method of conserving heat as claimed in any preceding claim wherein the heat store (20) in the vehicle comprises a thermal store block.

9. A method of conserving heat as claimed in anyone of claims 1 to 7 wherein the heat store (20) in the vehicle comprises a vessel (20a) containing an appropriate fluid.

10. A method of conserving heat as claimed in claim 9 wherein the heat-retaining capacity of the heat store (20) is enhanced by providing in the liquid a material, which has latent heat capacity.

11. A method of conserving heat as claimed in claim 10 wherein the material is provided in the form of spheres.

12. A method of conserving heat as claimed in claim 10 or claim 11 wherein the material is a phase change material.

13. A method of conserving heat as claimed in any one of claims 1 to 9 wherein the heat store (20) contains a phase change material.

14. A method of conserving heat as claimed in any one of the previous claims, in which the heat transfer means for removing heat from the block or insert and transferring the heat to said means (24) adapted to store or use heat at a remote location is a circuit (26, 42, 43, 44) through which water or other liquid is circulated.

15. A method of conserving heat as claimed in any preceding claim wherein heat is transferred from the heat store (20) to another part of the vehicle whenever the temperature of the vehicle drops below a predetermined level.

16. A method of conserving heat as claimed in any preceding claim wherein heat is transferred directly from the exhaust gasses to the material in the heat store.

17. An apparatus for conserving heat comprising a storage means (20) incorporated in or adapted to be fitted to a road vehicle and adapted to store heat generated during use of the vehicle, and transfer means (26, 41, 42, 43, 44,) which are connected or adapted to be connected to the storage means (20) and to means (24) provided at a remote location and adapted to store or use heat and which are adapted to transfer heat from the storage means (20) to said means (24) at the remote location, the connection of the transfer means to the storage means or/and the said means at the remote location being releasable, the apparatus stores heat obtained from the exhaust system (30) of the vehicle
**characterised in that** the transfer means comprises a thermally conducting block (41) or insert which can be placed against or removably inserted into the vehicle heat store so that heat is transferred to it by conduction, the block (41) or insert having means (26, 42, 43, 44) for removing heat from it and for transferring the heat to said means (24) adapted to store or use heat at the remote location.

18. An apparatus as claimed in claim 17 wherein the apparatus further includes a storage means (25) installed or adapted to be installed at said remote location and adapted to be connected to the transfer means so as to receive and store heat transferred from the first storage means (20), the second storage means (25) being connected or connectible to means for utilising the heat stored in it.

19. An apparatus as claimed in claim 17 or claim 18 wherein if the heat source (30) to which the storage means (20) in a vehicle is connected or connectible generates heat at a faster rate or produces a greater amount of heat than can be extracted or stored by said storage means, the apparatus includes means for controlling the transfer rate or/and amount of heat extracted by said storage means from the vehicle heat source.

## Patentansprüche

1. Verfahren zur Erhaltung von Wärme, das die folgenden Schritte beinhaltet: Speichern von Wärme, die in einem Straßenfahrzeug bei dessen Gebrauch erzeugt wird, in einem Wärmespeicher an oder in dem Fahrzeug, Anschließen des Wärmespeichers (20) an ein Mittel (24), das an einem fernen Ort vorgesehen und so gestaltet ist, dass es Wärme für eine spätere Nutzung speichert oder Wärme nutzt, und Abtrennen des Wärmespeichers von dem genannten fernen Mittel (24), wobei die in dem Straßenfahrzeug gespeicherte Wärme vom Abgassystem (30) des Fahrzeugs gewonnen wird, und **dadurch gekennzeichnet, dass** der Fahrzeugwärmespeicher an das genannte ferne Mittel (24) über einen wärmeleitenden Block (41) oder Einsatz angeschlossen wird, der entfernbar an dem Fahrzeugwärmespeicher platziert oder entfernbar darin eingeführt wird, so dass Wärme vom Wärmespeicher durch Leitung darauf übertragen wird, wobei der Block (41) oder Einsatz durch Wärmeübertragungsmittel (26, 42, 43, 44) zum Übertragen von Wärme von dem Block oder Einsatz auf das genannte ferne Mittel (24) thermisch an das ferne Mittel (24) angeschlossen wird, wobei der Block oder Einsatz vom **Fahrzeugwärmespeicher entfernt wird, um den** Fahrzeugwärmespeicher von dem fernen Mittel abzutrennen.

2. Verfahren zur Erhaltung von Wärme nach Anspruch 1, wobei der ferne Ort in Wohn-, Industrie- oder Gewerbegebäuden ist.

3. Verfahren zur Erhaltung von Wärme nach Anspruch 1 oder Anspruch 2, wobei der ferne Ort ein Wohnwagen, ein Wohnmobil oder ein Boot ist.

4. Verfahren zur Erhaltung von Wärme nach einem der Ansprüche 1 bis 3, wobei die zu dem fernen Ort übertragene Wärme genutzt wird, während die Übertragung stattfindet.

5. Verfahren zur Erhaltung von Wärme nach einem der Ansprüche 1 bis 4, wobei das genannte Mittel an dem fernen Ort ein Mittel (24) zum Speichern der übertragenen Wärme für eine spätere Nutzung ist.

6. Verfahren zur Erhaltung von Wärme nach einem der Ansprüche 1 bis 5, wobei das Mittel (24) einen Tank oder anderen Behälter (25) zum Aufnehmen von Wasser oder eine andere Wärme zurückhaltende Flüssigkeit umfasst.

7. Verfahren zur Erhaltung von Wärme nach Anspruch 6, wobei das genannte Mittel (24) der Wassertank (25) sein kann, der herkömmlicherweise in der Warmwasserversorgung und/oder im Zentralheizungssystem integriert ist, so dass die mit dem erfindungsgemäßen Verfahren auf das Wasser in dem Tank übertragene Wärme zum Bereitstellen einer Warmwasserversorgung und/oder einer Raumheizung in der Anlage verwendet werden kann.

8. Verfahren zur Erhaltung von Wärme nach einem der vorherigen Ansprüche, wobei der Wärmespeicher (20) in dem Fahrzeug einen Wärmespeicherblock umfasst.

9. Verfahren zur Erhaltung von Wärme nach einem der Ansprüche 1 bis 7, wobei der Wärmespeicher (20) in dem Fahrzeug einen Behälter (20a) umfasst, der ein geeignetes Fluid enthält.

10. Verfahren zur Erhaltung von Wärme nach Anspruch 9, wobei das Wärmerückhaltevermögen des Wärmespeichers (20) dadurch erhöht wird, dass in der Flüssigkeit ein Material mit einer latenten Wärmekapazität vorgesehen wird.

11. Verfahren zur Erhaltung von Wärme nach Anspruch 10, wobei das Material in Kugelform vorgesehen ist.

12. Verfahren zur Erhaltung von Wärme nach Anspruch 10 **oder Anspruch 11, wobei das Material ein** Phasenwechselmaterial ist.

13. Verfahren zur Erhaltung von Wärme nach einem der Ansprüche 1 bis 9, wobei der Wärmespeicher (20) ein Phasenwechselmaterial enthält.

14. Verfahren zur Erhaltung von Wärme nach einem der vorherigen Ansprüche, bei dem das Wärmeübertragungsmittel zum Abziehen von Wärme von dem Block oder Einsatz und zum Übertragen der Wärme auf das genannte Mittel (24), das so gestaltet ist, dass es Wärme an einem fernen Ort speichert oder nutzt, ein Kreislauf (26, 42, 43, 44) ist, durch den Wasser oder eine andere Flüssigkeit umgeführt wird.

15. Verfahren zur Erhaltung von Wärme nach einem der vorherigen Ansprüche, wobei Wärme von dem Wärmespeicher (20) zu einem anderen Teil des Fahrzeugs immer dann übertragen wird, wenn die Temperatur des Fahrzeugs unter einen vorbestimmten Wert abfällt.

16. Verfahren zur Erhaltung von Wärme nach einem der vorherigen Ansprüche, wobei Wärme direkt von den Abgasen auf das Material in dem Wärmespeicher übertragen wird.

17. Vorrichtung zur Erhaltung von Wärme, die Folgendes umfasst: ein Speichermittel (20), das i n einem Straßenfahrzeug integriert ist oder mit dem ein solches ausgerüstet werden kann und das so gestaltet ist, dass es beim Gebrauch des Fahrzeugs erzeugte Wärme speichert, und Übertragungsmittel (26, 41, 42, 43, 44), die an das Speichermittel (20) und an ein Mittel (24) angeschlossen sind oder werden können, das an einem fernen Ort vorgesehen und so gestaltet ist, dass es Wärme speichert oder nutzt, und die zum Übertragen von Wärme von dem Speichermittel (20) auf das genannte Mittel (24) an dem fernen Ort gestaltet sind, wobei der Anschluss des Übertragungsmittels an das Speichermittel und/oder das genannte Mittel an dem fernen Ort lösbar ist, wobei die Vorrichtung vom Abgassystem (30) des Fahrzeugs gewonnene Wärme speichert, **dadurch gekennzeichnet, dass** das Übertragungsmittel einen wärmeleitenden Block (41) oder Einsatz umfasst, der an dem Fahrzeugwärmespeicher platziert oder entfernbar darin eingeführt werden kann, so dass die Wärme durch Leitung darauf übertragen wird, wobei der Block (41) oder Einsatz Mittel (26, 42, 43, 44) zum Abziehen von Wärme davon und zum Übertragen der Wärme auf das genannte Mittel (24) zum Speichern oder Nutzen von Wärme an dem fernen Ort versehen ist.

18. Vorrichtung nach Anspruch 17, wobei die Vorrichtung ferner ein Speichermittel (25) beinhaltet, das an dem genannten fernen Ort installiert ist oder werden kann und das an das Übertragungsmittel angeschlossen werden kann, um vom ersten Speichermittel (20) übertragene Wärme aufzunehmen und zu speichern, wobei das zweite Speichermittel (25) an ein Mittel angeschlossen ist oder werden kann, um die darin gespeicherte Wärme zu nutzen.

19. Vorrichtung nach Anspruch 17 oder Anspruch 18, wobei die Vorrichtung, falls die Wärmequelle (30), an die das Speichermittel (20) in einem Fahrzeug angeschlossen ist oder werden kann, Wärme mit einer höheren Geschwindigkeit erzeugt oder eine größere Menge an Wärme erzeugt, als von dem genannten Speichermittel abgezogen oder gespeichert **werden kann, ein Mittel zum Regulieren der** Übertragungsgeschwindigkeit und/oder der von dem genannten Speichermittel von der Fahrzeugwärmequelle abgezogenen Wärmemenge aufweist.

## Revendications

1. Procédé de conservation de la chaleur comprenant les étapes consistant à emmagasiner la chaleur, générée dans un véhicule routier au cours de son utilisation, dans un accumulateur de chaleur situé sur ou dans le véhicule, à raccorder l'accumulateur de chaleur (20) à des moyens (24) prévus à un emplacement distant et conçus pour emmagasiner la chaleur en vue d'une utilisation ultérieure ou pour utiliser la chaleur, et à débrancher l'accumulateur de chaleur desdits moyens distants (24), la chaleur emmagasinée dans le véhicule routier étant obtenue à partir du système d'échappement (30) du véhicule, et **caractérisé en ce que** l'accumulateur de chaleur du véhicule est raccordé auxdits moyens distants (24) par l'intermédiaire d'un élément rapporté ou d'un bloc (41) thermiquement conducteur qui est positionné de façon amovible contre l'accumulateur de chaleur du véhicule, ou introduit de façon amovible dans l'accumulateur de chaleur du véhicule, de sorte que la chaleur est transférée par conduction vers celui-ci à partir de l'accumulateur de chaleur, le bloc (41) ou l'élément rapporté étant thermiquement raccordé aux moyens distants (24) grâce à des moyens de transfert de chaleur (26, 42, 43, 44) afin de transférer la chaleur à partir du bloc ou de l'élément rapporté vers lesdits moyens distants (24), le bloc ou l'élément rapporté étant enlevé de l'accumulateur de chaleur du véhicule afin de déconnecter l'accumulateur de chaleur du véhicule au niveau des moyens distants.

2. Procédé de conservation de la chaleur selon la revendication 1, l'emplacement distant se trouvant dans des locaux domestiques, industriels ou commerciaux.

3. Procédé de conservation de la chaleur selon la revendication 1 ou la revendication 2, l'emplacement distant se trouvant dans une caravane, une maison mobile ou un bateau.

4. Procédé de conservation de la chaleur selon l'une quelconque des revendications 1 à 3, la chaleur transférée vers l'emplacement distant étant utilisée au fur et à mesure que le transfert a lieu.

5. Procédé de conservation de la chaleur selon l'une quelconque des revendications 1 à 4, lesdits moyens se trouvant dans l'emplacement distant devant être des moyens (24) destinés à emmagasiner la chaleur transférée en vue d'une utilisation future.

6. Procédé de conservation de la chaleur selon l'une quelconque des revendications 1 à 5, les moyens (24) englobant un réservoir ou un autre récipient (25) pour contenir de l'eau ou un autre liquide apte à maintenir la chaleur.

7. Procédé de conservation de la chaleur selon la revendication 6, lesdits moyens (24) pouvant être le réservoir d'eau (25) habituellement incorporé à l'alimentation en eau chaude et/ou au système de chauffage central de sorte que la chaleur transférée à l'eau se trouvant dans le réservoir, suivant le procédé de l'invention, peut être utilisée pour assurer l'alimentation en eau chaude et/ou le chauffage dans les locaux.

8. Procédé de conservation de la chaleur selon l'une quelconque des revendications précédentes, l'accumulateur de chaleur (20) monté dans le véhicule englobant un bloc accumulateur thermique.

9. Procédé de conservation de la chaleur selon l'une quelconque des revendications 1 à 7, l'accumulateur de chaleur (20) monté dans le véhicule englobant un récipient (20a) lequel contient un fluide approprié.

10. Procédé de conservation de la chaleur selon la revendication 9, l'aptitude à maintenir la chaleur de l'accumulateur de chaleur (20) étant améliorée grâce à l'adjonction au liquide d'une matière qui possède une capacité calorifique latente.

11. Procédé de conservation de la chaleur selon la revendication 10, la matière se présentant sous la forme de sphères.

12. Procédé de conservation de la chaleur selon la revendication 10 ou la revendication 11, la matière étant une matière à changement de phase.

13. Procédé de conservation de la chaleur selon l'une quelconque des revendications 1 à 9, l'accumulateur de chaleur (20) contenant une matière à changement de phase.

14. Procédé de conservation de la chaleur selon l'une quelconque des revendications précédentes, les moyens de transfert de chaleur servant à enlever de la chaleur à partir du bloc ou de l'élément rapporté et à transférer la chaleur vers lesdits moyens (24), conçus pour emmagasiner ou utiliser la chaleur en un emplacement distant, étant un circuit (26, 42, 43, 44) à travers lequel circule de l'eau ou un autre liquide.

15. Procédé de conservation de la chaleur selon l'une quelconque des revendications précédentes, la chaleur étant transférée à partir de l'accumulateur de chaleur (20) vers une autre partie du véhicule chaque fois que la température du véhicule descend en dessous d'un niveau prédéterminé.

16. Procédé de conservation de la chaleur selon l'une quelconque des revendications précédentes, la chaleur étant transférée directement depuis les gaz d'échappement vers la matière se trouvant dans l'accumulateur de chaleur.

17. Appareil de conservation de la chaleur comprenant des moyens d'accumulation (20) qui sont incorporés à un véhicule routier, ou sont conçus pour être montés sur un véhicule routier, et sont conçus pour emmagasiner la chaleur générée au cours de l'utilisation du véhicule, et des moyens de transfert (26, 41, 42, 43, 44) qui sont raccordés ou conçus pour être raccordés aux moyens d'accumulation (20) et à des moyens (24) prévus en un emplacement distant et conçus pour emmagasiner ou utiliser la chaleur et qui sont conçus pour transférer la chaleur à partir des moyens d'accumulation (20) vers lesdits moyens (24) au niveau de l'emplacement distant, le raccordement des moyens de transfert aux moyens d'accumulation et/ou auxdits moyens au niveau de l'emplacement distant étant apte à être libéré, l'appareil emmagasinant la chaleur obtenue à partir du système d'échappement (30) du véhicule, **caractérisé en ce que** les moyens de transfert englobent un bloc (41) ou un élément rapporté thermiquement conducteur lequel peut être positionné contre l'accumulateur de chaleur du véhicule, ou introduit de façon amovible dans l'accumulateur de chaleur du véhicule, de sorte que la chaleur est transférée par conduction vers celui-ci, le bloc (41) ou l'élément rapporté possédant des moyens (26, 42, 43, 44) destinés à enlever de la chaleur à partir de celui-ci et à transférer la chaleur vers lesdits moyens (24) conçus pour emmagasiner ou utiliser la chaleur au niveau de l'emplacement distant.

18. Appareil selon la revendication 17, l'appareil comportant en outre des moyens d'accumulation (25) qui sont installés, ou destinés à être installés, au niveau dudit emplacement distant et conçus pour être raccordés aux moyens de transfert afin de recevoir et d'emmagasiner la chaleur ayant été transférée à partir des premiers moyens d'accumulation (20), les deuxièmes moyens d'accumulation (25) étant raccordés ou pouvant être raccordés à des moyens pour utiliser la chaleur qui y est emmagasinée.

19. Appareil selon la revendication 17 ou la revendication 18, l'appareil comportant des moyens pour réguler la cadence de transfert et/ou la quantité de chaleur extraite par lesdits moyens d'accumulation à partir de la source de chaleur du véhicule, dans les cas où la source de chaleur (30), à laquelle les moyens d'accumulation (20) d'un véhicule sont raccordés ou peuvent être raccordés, génère de la chaleur à une cadence plus rapide ou produit une plus grande quantité de chaleur que lesdits moyens d'accumulation ne sont en mesure d'extraire ou d'emmagasiner.
